# EUROPÄISCHE PATENTSCHRIFT

(11) **EP 2 650 697 B1**
(45) Veröffentlichungstag und Bekanntmachung des Hinweises auf die Patenterteilung: **25.05.2016**
(21) Anmeldenummer: 13001738.7
(22) Anmeldetag: 05.04.2013
(51) Int. Cl.: G01S 19/07, H04B 7/185, G01S 19/08

(54) **Erzeugung eines Datenstroms mit Benutzernachrichten in einem Satelliten-gestützten Erweiterungssystem**
Generation of a data stream with user messages in a satellite-based augmentation system
Production d'un flux de données dotées de messages d'utilisateur dans un système d'augmentation par satellite

(30) Priorität: 12.04.2012 DE 102012007201
(43) Veröffentlichungstag der Anmeldung: 16.10.2013
(73) Patentinhaber: Airbus DS GmbH, 82024 Taufkirchen (DE)
(72) Erfinder: Trautenberg, Hans L., Dr., 50823 Köln (DE)
(74) Vertreter: Frenkel, Matthias Alexander

(56) Entgegenhaltungen:
- US-A1- 2005 122 260
- US-B1- 6 801 854
- WESTBROOK J ET AL: "EGNOS Central Processing Facility architecture and design", GNSS 2000 CONFERENCE, EDINBURGH, SCOTLAND, UK, MAY 1-4, 2000, , 1. Mai 2000 (2000-05-01), Seiten 1-18, XP002676599, Gefunden im Internet: URL:http://www.egnos-pro.esa.int/Publicati ons/GNSS%202000/GNSS2000_cpf.pdf

## Beschreibung

Die Erfindung betrifft ein Verfahren und eine Vorrichtung zum Erzeugen eines Datenstroms mit Benutzernachrichten in einem Satelliten-gestützten Erweiterungssystem gemäß Anspruch 1 bzw. 8.

Zur Steigerung der Genauigkeit der Positionsermittlung mit einem globalen Satellitennavigationssystem (GNSS: Global Navigation Satellite System) wie (NAVSTAR-)GPS, GLONASS oder dem zukünftigen europäischen Satellitennavigationssystem GALILEO werden Satelliten-gestützte Erweiterungssysteme (SBAS: Satellite Based Augmentation System) wie das europäische EGNOS (European Geostationary Navigation Overlay Service), das US-amerikanische WAAS (Wide Area Augmentation System) oder das japanische MSAS (Multifunctional Satellite Augmentation System) eingesetzt.

Ein SBAS setzt zusätzliche Satelliten zu einem zu erweiternden GNSS ein, die regional begrenzt Korrekturdaten aussenden, die von geeigneten Nutzungssystemen (SBAS-Empfänger) des GNSS zur Steigerung der Genauigkeit der Positionsermittlung verwendet werden können. Weiterhin kann ein Erweiterungssystem auch Integritätsdaten bzw. Integritätsinformationen zum erweiterten GNSS aussenden, welche die Empfänger in die Lage versetzen, ein Integritätsrisiko zu ermitteln und bei einem zu hohen Risiko zu warnen. Beispielsweise sendet EGNOS neben Korrekturdaten auch Daten zur Integrität von GPS aus.

EGNOS umfasst ein Netzwerk von 34 RIMS (Ranging and Integrity Monitoring Station), welche Navigationssignale des erweiterten GNSS, derzeit GPS und GLONASS, empfangen. In vier redundanten MCC (Master Control Center) werden aus den Daten der RIMS Korrektur- und Integritätsdaten (EGNOS-Daten) berechnet. Die von den MCC berechneten EGNOS-Daten werden von sechs Uplink-Stationen NLES (Navigation Land Earth Station) in Form von GEO-Nachrichten an die drei geostationären EGNOS-Satelliten (GEO-Satelliten) übertragen, welche die EGNOS-Daten in Form eines Datenstroms mit EGNOS-Benutzernachrichten an Nutzungssysteme zu verbreiten. Zusätzlich werden die EGNOS-Daten auch über das Internet zur Verfügung gestellt, so dass bei gestörtem EGNOS-Satelliten-Empfang Nutzungssysteme mit Internetzugriff dennoch aktuelle EGNOS-Daten empfangen können.

Die Berechnung der EGNOS-Daten in einem MCC wird von einer CPF (Central Processing Facility) durchgeführt. Die EGNOS-Nachricht mit EGNOS-Daten wird von einer MGF (Message Generation Facility) im MCC erzeugt und für die Übertragung durch die Uplink-Stationen NLES zur Verfügung gestellt. Somit erzeugt jedes MCC mit seiner CPF und MGF eigene EGNOS-Nachrichten, die den NLES zur Übertragung zur Verfügung stehen.

Es sind verschiedene EGNOS-Nachrichttypen definiert. Beispielsweise übermitteln EGNOS-Nachrichten der Typen 2-5 Korrekturen der einzelnen Satelliten des erweiterten GNSS und EGNOS-Nachrichten vom Typ 6 Integritätsinformationen.

Jede Uplink-Station NLES wählt aus den verschiedenen CPFs eine bestimmte als Datenquelle aus, von der sie die erzeugten und zur Verfügung gestellten EGNOS-Nachrichten übernimmt und an den vor ihr kontrollierten EGNOS-Satelliten überträgt. Die von einer NLES ausgewählte CPF wird als "selected" und die übrigen CPFs als "backup" bezeichnet. Eine von einer NLES als "selected" gekennzeichnete CPF übermittelt an die NLES einen vollständigen Nachrichtensatz mit allen EGNOS-Nachrichtentypen, während die als "backup" gekennzeichnten CPFs nur Integritätsdaten (EGNOS-Nachrichtentyp 6) an die NLES senden. Eine NLES wählt eine bestimmte CPF basierend auf einer Quality-of-Service-Kennzahl und von der CPF zur Verfügung gestellten Go/Nogo-Flags aus, die von jeder CPF an alle NLES gesondert übertragen werden.

Gemäß dem aktuellen Entwurf von EGNOS V2 ist es über einen Datenstrom mit EGNOS-Benutzernachricht für eine CPF und auch für einzelne MGF nicht feststellbar, welche MGF und damit auch CPF von einer NLES für das Erzeugen von GEO-Nachrichten ausgewählt wurde. Wird beispielsweise von einem der drei EGNOS-Satelliten ein Datenstrom mit EGNOS-Benutzernachrichten empfangen, kann anhand der EGNOS-Benutzernachrichten nicht festgestellt werden, welche CPF und damit auch MGF die NLES, welche den EGNOS-Satelliten mit Daten versorgt, von allen in EGNOS vorhandenen CPFs und MGFs als Datenquellen ausgewählt hat. Die Veröffentlichung "EGNOS Central Processing Facility architecture and design", J.Westbrook et al, GNSS 2000 Conference, Edinburgh, Scotland, UK, May 1-4, 2000, XP002676599, stellt die Architektur und Konstruktion des CPF vor und führt ihre zwei Hauptkomponenten, nämlich das CPF Processing Set und das CPF Check Set ein. Die Algorithmen, die verwendet werden, um die Navigations- und Integritäts-Informationen für EGNOS bereitzustellen, werden vorgestellt, und es wird eine Präsentation über die zu erwartenden Leistungen für EGNOS Benutzer gemacht und mit Testergebnissen konsolidiert.

Es ist nun eine Aufgabe der vorliegenden Erfindung, ein Verfahren und eine Vorrichtung zum Erzeugen eines Datenstroms mit Benutzernachrichten in einem Satelliten-gestützten Erweiterungssystem vorzuschlagen, wobei der Datenstrom geeignet sein soll, eine für die Erzeugung von Benutzernachrichten eines Satelliten-gestützten Erweiterungssystems genutzte Datenquelle, insbesondere eine von einer NLES ausgewählte CPF und eine MGF als Quelle für EGNOS-Benutzernachrichten identifizieren zu können.

Diese Aufgabe wird durch ein Verfahren zum Erzeugen eines Datenstroms mit Benutzernachrichten in einem Satelliten-gestützten Erweiterungssystem mit den Merkmalen von Anspruch 1 und eine Vorrichtung mit den Merkmalen von Anspruch 8 gelöst. Weitere Ausgestaltungen der Erfindung sind Gegenstand der abhängigen Ansprüche.

Ein der Erfindung zugrunde liegender Gedanke besteht darin, bei einem Satelliten-gestützten Erweiterungssystem den Datenstrom mit Benutzernachrichten als Hinweis auf die für die Erzeugung der Benutzernachrichten genutzte Datenquelle des Erweiterungssystems zu kodieren. Hierbei soll die Kodierung derart erfolgen, dass keine zusätzlichen Schnittstellen eingeführt werden müssen. Als geeignete Kodierungsart wird durch die Erfindung die Reihenfolge von unterschiedlichen Nachrichtentypen der Benutzernachrichten in einem Datenstrom vorgeschlagen. Wie bereits eingangs erläutert werden beispielsweise bei EGNOS mit Nachrichten der Typen 2-5 Korrekturen der einzelnen Satelliten des erweiterten GNSS übermittelt. Durch Zuweisen jeweils einer eindeutigen Reihenfolge von Nachrichtentypen zu Datenquellen im Erweiterungssystem können daher die Datenströme mit Benutzernachrichten von den Datenquellen unterschiedlich ausgebildet werden, so dass eine Identifikation der für einen bestimmten Datenstrom mit Benutzernachrichten genutzten Datenquelle ermöglicht wird. Beispielsweise können bei EGNOS unterschiedliche Reihenfolgen der Nachrichtentypen 2-5 den in EGNOS vorhandenen Datenquellen CPFs und MGFs zugewiesen werden, so dass anhand des von einem EGNOS-Satelliten ausgesendeten Datenstroms mit EGNOS-Benutzernachrichten die CPF und MGF, die zum Erzeugen der EGNOS-Benutzernachrichten von der den EGNOS-Satelliten versorgenden NLES ausgewählt wurden, identifiziert werden können. Damit kann jede MGF und damit auch CPF anhand eines Datenstroms mit EGNOS-Benutzernachrichten feststellen, welche CPF und MGF von einer NLES für den jeweiligen EGNOS-Satelliten ausgewählt wurden.

Eine Ausführungsform der Erfindung betrifft nun ein Verfahren zum Erzeugen eines Datenstroms mit Benutzernachrichten in einem Satelliten-gestützten Erweiterungssystem, wobei die Benutzernachrichten unterschiedliche Nachrichtentypen aufweisen können und das Verfahren die folgenden Schritte aufweist:
Bilden von mehreren vorbestimmten eindeutigen Reihenfolgen von Nachrichtentypen und Zuweisen von jeder gebildeten Reihenfolge zu jeweils einer von mehreren Datenquellen, die in dem Satelliten-gestützten Erweiterungssystem für die Erzeugung von Benutzernachrichten genutzt werden,

Auswählen einer der Datenquellen zum Erzeugen eines Datenstroms mit Benutzernachrichten, und

Erzeugen des Datenstroms mit Benutzernachrichten durch die ausgewählte Datenquelle unter Verwendung der vorbestimmten eindeutigen Reihenfolge von Nachrichtentypen, die der ausgewählten Datenquelle zugewiesen ist.

Insbesondere werden solche Nachrichtentypen für das Bilden von eindeutigen Reihenfolgen verwendet, die in jedem Datenstrom mit Benutzernachrichten enthalten sein müssen.

Vor allem können als Nachrichtentypen die für das Übermitteln von schnellen Korrekturen von Satelliten eines erweiterten globalen Satellitennavigationssystems vorgesehenen Nachrichtentypen verwendet werden.

Die Anzahl der verwendeten Nachrichtentypen kann anhand der Anzahl der Datenquellen, denen eine eindeutige Reihenfolge von Nachrichtentypen zugewiesen ist, gewählt werden.

Das Verfahren eignet sich insbesondere für einen Einsatz im Erweiterungssystem EGNOS V3 Phase A.

Eine weitere Ausführungsform der Erfindung betrifft ein Computerprogramm mit Programmcode zur Durchführung aller Verfahrensschritte nach der Erfindung und wie hierin beschrieben, wenn das Computerprogramm in einem Computer ausgeführt wird.

Ferner betrifft eine Ausführungsform der Erfindung einen Datenträger, auf dem der von einem Computer ausführbare Programmcode des Computerprogramms nach der Erfindung und wie vorstehend beschrieben gespeichert ist.

Eine weitere Ausführungsform der Erfindung betrifft eine Vorrichtung zum Erzeugen eines Datenstroms mit Benutzernachrichten in einem Satelliten-gestützten Erweiterungssystem, wobei die Benutzernachrichten unterschiedliche Nachrichtentypen aufweisen können und die Vorrichtung folgendes aufweist:
erste Mittel zum Bilden von mehreren vorbestimmten eindeutigen Reihenfolgen von Nachrichtentypen und Zuweisen von jeder gebildeten Reihenfolge zu jeweils einer von mehreren Datenquellen, die in dem Satelliten-gestützten Erweiterungssystem für die Erzeugung von Benutzernachrichten genutzt werden,
zweite Mittel zum Auswählen einer der Datenquellen zum Erzeugen eines Datenstroms mit Benutzernachrichten, und
dritte Mittel zum Erzeugen des Datenstroms mit Benutzernachrichten durch die ausgewählte Datenquelle unter Verwendung der vorbestimmten eindeutigen Reihenfolge von Nachrichtentypen, die der ausgewählten Datenquelle zugewiesen ist.

Die Vorrichtung kann zum Ausführen eines Verfahrens gemäß der Erfindung und wie hierin beschrieben ausgebildet sein.

Schließlich betrifft eine Ausführungsform der Erfindung einen Empfänger für einen Datenstrom mit Benutzernachrichten eines Satelliten-gestützten Erweiterungssystems, der gemäß einem Verfahren nach der Erfindung und/oder durch eine Vorrichtung nach der Erfindung erzeugt wird, wobei der Empfänger ausgebildet ist, im empfangenen Datenstrom eine eindeutige Reihenfolge von Nachrichtentypen von Benutzernachrichten zu erkennen und anhand der erkannten eindeutigen Reihenfolge eine Datenquelle von Benutzernachrichten zu identifizieren.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein GNSS und ein dieses erweiterndes SBAS;
Fig. 2 ein Flussdiagramm eines Ausführungsbeispiels des Verfahrens zum Erzeugen eines Datenstroms mit Benutzernachrichten in dem in Fig. 1 gezeigten SBAS; und
Fig. 3 ein Ausführungsbeispiel einer Vorrichtung zum Erzeugen eines Datenstroms mit Benutzernachrichten in einem SBAS gemäß der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

Im Folgenden wird die Erfindung anhand von EGNOS erläutert. Grundsätzlich eignet sich jedoch die Erfindung für jedes SBAS, in dem verschiedene Datenquellen zum Erzeugen von Benutzernachrichten vorgesehen sind und eine dieser Datenquellen für einen Datenstrom mit Benutzernachrichten ausgewählt wird. Daher ist die Erfindung nicht als auf EGNOS beschränkt zu betrachten.

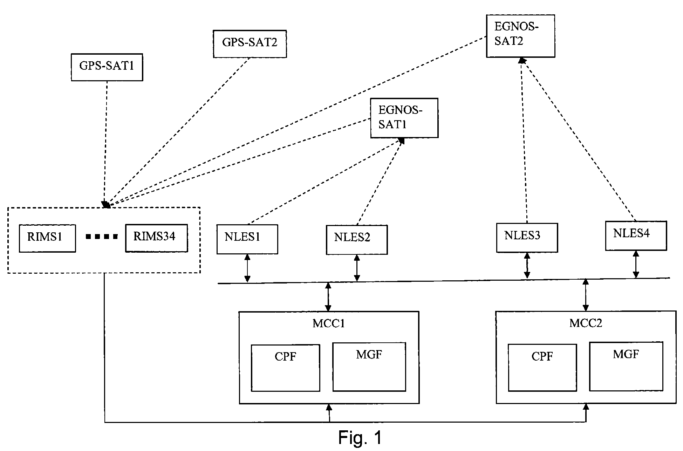

In Fig. 1 ist die Architektur des SBAS EGNOS skizziert, welches das GNSS GPS erweitert. Die EGNOS-Architektur ist aus Gründen der besseren Übersichtlichkeit nicht vollständig dargestellt. Anstelle von drei geostationären EGNOS-Satelliten sind nur zwei, anstellen von vier MCCs sind nur zwei und anstellte von sechs NLES sind nur vier gezeigt.

Ein Netzwerk von 34 in Europa und außerhalb Europas angeordnete RIMS RIMS1-RIMS34 überwacht die Signale von GPS-Satelliten, von denen zwei Satelliten GPS-SAT1 und GPS-SAT2 beispielhaft dargestellt sind. Mit den GPS-Signalen werden von den RIMS Messungen durchgeführt, die zum Ermitteln von Korrekturdaten und Integritätsinformationen für GPS dienen.

Die Messdaten der RIMS werden an die zwei dargestellten MCCs MCC1 und MCC2 von EGNOS über Datenverbindungen übermittelt. Jedes MCC weist eine CPF und eine MGF auf. Die CPF ermittelt Korrekturdaten und Integritätsinformationen für GPS für jeden der EGNOS-Satelliten EGNOS-SAT1 und EGNOS-SAT2, die jeweils unterschiedliche Regionen mit Korrekturdaten und Integritätsinformationen versorgen.

Die MCCs MCC1 und MCC2 weisen außerdem jeweils eine MGF auf, mit der EGNOS-Nachrichten erzeugt werden, die den Uplink-Stationen zur Übertragung an die EGNOS-Satelliten EGNOS-SAT1 und EGNOS-SAT2 zur Verfügung gestellt werden.

Pro EGNOS-Satellit EGNOS-SAT1 und EGNOS-SAT2 sind jeweils zwei Uplink-Stationen NLES1 und NLES2 bzw. NLES3 und NLES4 vorgesehen, von denen eine als Redundanz dient. Die Uplink-Stationen NLES 1 und NLES3 übertragen die von einer ausgewählten CPF erzeugten und der entsprechenden MGF zur Verfügung gestellten EGNOs-Nachrichten an den jeweiligen EGNOS-Satelliten EGNOS-SAT1 bzw. EGNOS-SAT2, die wiederum einen Datenstrom mit EGNOs-Benutzernachrichten in der von ihnen versorgten Region verbreiten.

Gemäß EGNOS sind verschiedene Typen von EGNOS-Benutzernachrichten vorgesehen. Mit den Nachrichtentypen 2-5 werden schnelle Korrekturen für die einzelnen GPS-Satelliten übermittelt. Mit einem der Nachrichtentypen 2-5 können schnelle Korrekturen für bis zu 13 Satelliten übermittelt werden. Die derzeitige Konstellation von GPS sieht 32 operationale Satelliten vor, so dass mindestens die Nachrichtentypen 2, 3 und 4 übermittelt werden müssen. Die Nachrichtentypen 2 und 3 beinhalten hierbei Daten für schnelle Korrekturen von jeweils 13 GPS-Satelliten und Nachrichtentyp 4 Daten für schnelle Korrekturen der übrigen 6 GPS-Satelliten.

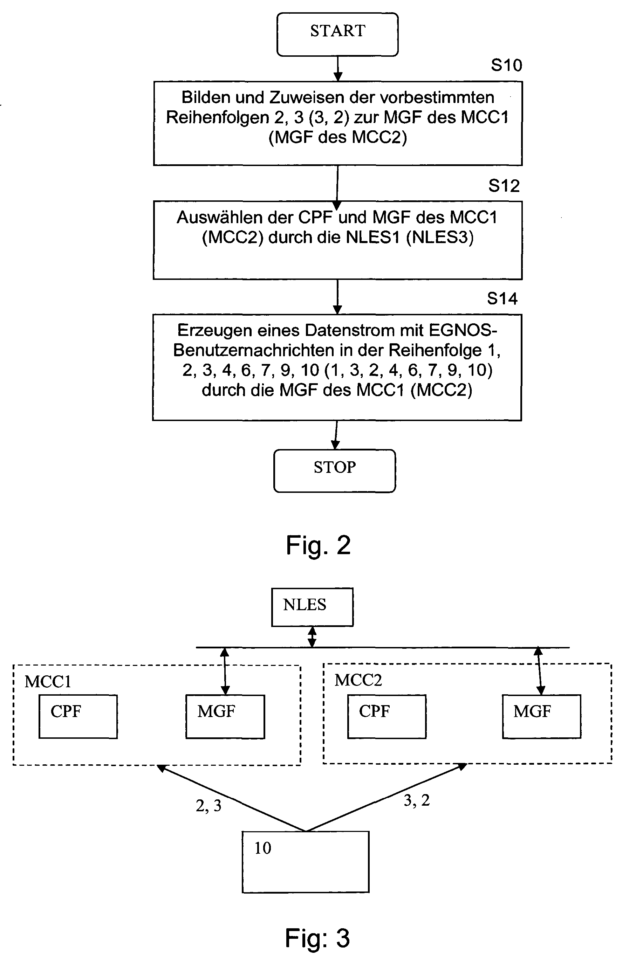

Unter Bezugnahme auf das in Fig. 2 dargestellte Ablaufdiagramm und das in Fig. 1 dargestellte SBAS wird nun das erfindungsgemäße Verfahren zum Erzeugen eines Datenstroms mit Benutzernachrichten im Detail erläutert.

In einem ersten Schritt S10 werden nun zwei vorbestimmte eindeutige Reihenfolgen 2, 3 und 3, 2 aus den beiden Nachrichtentypen 2 und 3 gebildet, die mit jedem Datenstrom mit EGNOS-Benutzernachrichten übermittelt werden müssen und zudem mit einer relativ geringen Wiederholperiode und damit recht häufig übertragen werden, da mit ihnen schnell Korrekturen an EGNOS-Empfänger übermittelt werden müssen,. Die gebildeten Reihenfolgen werden dann ebenfalls im Schritt S10 den MGF der MCC zugewiesen. Beispielsweise kann der MGF des MCC1 die Reihenfolge 2, 3 und der MGF des MCC2 die Reihenfolge 3, 2 zugewiesen werden (eine umgekehrte Zuweisung ist ebenso möglich; es kommt nur darauf an, dass eine eindeutige Reihenfolge nur einer Datenquelle zugewiesen ist, so dass eine Datenquelle eindeutig identifizierbar ist).

Die MGFs erzeugen aufgrund der Zuweisung Reihenfolgen von EGNOS-Benutzernachrichten nun so, dass diese die der jeweiligen MGF zugewiesenen eindeutigen Reihenfolge der Nachrichtentypen 2 und 3 aufweist. Beispielsweise erzeugt die MGF des MCC1 Reihenfolgen von EGNOS-Benutzernachrichten so, dass diese EGNOS-Benutzernachrichten der Typen 2-3 in der Reihenfolge 2, 3 aufweisen, also beispielsweise 1, 2, 3, 4, 6, 7, 9, 10 (1, 6, 7, 9 und 10 sind weitere EGNOS-Nachrichtentypen). Entsprechend erzeugt die MGF des MCC2 EGNOS-Benutzernachrichten so, dass diese EGNOS-Benutzernachrichten der Typen 2-3 in der Reihenfolge 3, 2 aufweisen, also beispielsweise 1, 3, 2, 4, 6, 7, 9, 10 (1, 6, 7, 9 und 10 sind weitere EGNOS-Nachrichtentypen).

Im Schritt S12 wird die CPF und MGF des MCC1 von der NLES1 als Datenquelle zum Erzeugen eines Datenstroms mit EGNOs-Benutzernachrichten ausgewählt. Daraufhin erzeugt die MGF des MCC1 einen Datenstrom mit EGNOS-Benutzernachrichten in der Reihenfolge 1, 2, 3, 4, 6, 7, 9, 10 (Schritt S14), der von der NLES1 an den EGNOS-Satelliten EGNOS-SAT1 übertragen wird, so dass dieser den Datenstrom in seiner Region verbreiten kann. Dadurch ist es Nutzungssystemen in der vom EGNOS-Satelliten EGNOS-SAT1 versorgten Region möglich, durch Empfang des verbreiteten Datenstroms und Erkennen der Reihenfolge der Nachrichtentypen 2 und 3 die CPF und MGF des MCC1 als Datenquelle der EGNOS-Benutzernachrichten zu identifizieren. Entsprechend kann die NLES3 die CPF und MGF des MCC1 als Datenquellen auswählen (Schritt S12), wodurch die MGF im MCC2 einen Datenstrom mit EGNOS-Benutzernachrichten in der Reihenfolge 1, 3, 2, 4, 6, 7, 9, 10 zur Verbreitung über den EGNOS-Satelliten EGNOS-SAT2 erzeugt (Schritt S14), so dass Nutzungssysteme in der von diesem EGNOS-Satelliten versorgten Region als Datenquelle der EGNOS-Benutzernachrichten die CPF und MGF des MCC2 identifizieren können.

Generell können mit den drei Nachrichtentypen 2-4 insgesamt die folgenden 3x2=6 unterschiedlichen Reihenfolgen erzeugt werden, die demnach sechs verschiedenen MGFs bzw. CPFs zugewiesen werden können:

| Vorbestimmte Reihenfolge |
|---|
| 2, 3, 4 |
| 2, 4, 3 |
| 3, 4, 2 |
| 3, 2, 4 |
| 4, 2, 3 |
| 4, 3, 2 |

Es ist daher prinzipiell möglich, sechs unterscheidbare Datenströme mit EGNOS-Benutzernachrichten zu generieren, wenn eine Wiederholperiode der Nachrichten zur Identifikation verwendet wird. Werden zwei Wiederholperioden der Nachrichten zur Identifikation verwendet, können sogar (3x2)x(3x2)=36 unterscheidbare Datenströme mit EGNOS-Benutzernachrichten erzeugt werden.

Fig. 3 zeigt eine Vorrichtung zum erfindungsgemäßen Erzeugen eines Datenstroms mit Benutzernachrichten, wie sie im Fig. 1 gezeigten SBAS eingesetzt werden kann. Die Vorrichtung weist erste Mittel 10 zum Bilden und Zuweisen der beiden vorbestimmten eindeutigen Reihenfolgen der Nachrichtentypen 2, 3 und 3, 2 zu den CPF und MGF der MCC1 und MCC2 als Datenquellen auf. Die ersten Mittel 10 können beispielsweise als Computerprogramm implementiert sein, das Daten über alle unterschiedlichen Datenquellen im EGNOS-SBAS erhält und darauf basierend die vorbestimmten eindeutigen Reihenfolgen bildet und den CPF und MGF der MCCs zuweist. Weiterhin wiest die Vorrichtung als zweite Mittel eine NLES auf, welche die CPF und MGF einer der beidem MCCs MCC1 und MCC2 als Datenquellen zum Erzeugen des Datenstroms auswählt. Schließlich sind als dritte Mittel zum Erzeugen des Datenstroms die MGF der beiden MCCs MCC1 und MCC2 vorgesehen. Die MGFs erzeugen den Datenstrom mit EGNOS-Benutzernachrichten unter Verwendung der durch die Mittel 10 zugewiesenen vorbestimmten eindeutigen Reihenfolge von Nachrichtentypen, d.h. die MGF des MCC1 unter Verwendung der Reihenfolge 2, 3 und die MGF des MCC2 unter Verwendung der Reihenfolge 3, 2.

Ein Vorteil der Identifikation einer Datenquelle anhand der Reihenfolge von Nachrichtentypen im Datenstrom mit EGNOS-Benutzernachrichten besteht darin, dass keine neue Schnittstelle definiert werden muss. Vielmehr können EGNOS-Nutzungssysteme durch entsprechende Softwareanpassungen in die Lage versetzt werden, die Identifikation der Datenquelle wie oben beschrieben durchzuführen.

Mit der vorliegenden Erfindung wird ohne Einführung einer neuen Schnittstelle die Identifikation von Datenquellen von Benutzernachrichten in einem Satelliten-gestützten Erweiterungssystem für ein globales Satellitennavigationssystem ermöglicht. Dadurch kann beispielsweise bei EGNOS eine MGF ermitteln, welche MGF gerade von einer NLES für die Bereitstellung von Daten für den jeweiligen EGNOS-Satelliten ausgewählt wurde.

### BEZUGSZEICHEN UND AKRONYME

- 10: erste Mittel
- GPS-SAT1: GPS-Satellit
- GPS-SAT2: GPS-Satellit
- EGNOS-SAT1: EGNOS-Satellit
- EGNOS-SAT2: EGNOS-Satellit
- RIMS1-RIMS34: Netzwerk von RIMS
- MGF: dritte Mittel
- NLES: zweite Mittel
- NLES1: NLES-Uplink-Station
- NLES2: NLES-Uplink-Station
- NLES3: NLES-Uplink-Station
- NLES4: NLES-Uplink-Station
- MCC1: erstes MCC
- MCC2: zweites MCC

- CPF: Central Processing Facility
- EGNOS: European Geostationary Navigation Overlay Service
- GNSS: Global Navigation Satellite System
- MCC: Master Control Center
- MGF: Message Generation Facility
- MSAS: Multifunctional Satellite Augmentation System
- NLES: Navigation Land Earth Station
- SBAS: Satellite Based Augmentation System
- WAAS: Wide Area Augmentation System

## Patentansprüche

1. Verfahren zum Erzeugen eines Datenstroms mit Benutzernachrichten in einem Satelliten-gestützten Erweiterungssystem, wobei die Benutzernachrichten unterschiedliche Nachrichtentypen aufweisen können und das Verfahren die folgenden Schritte aufweist:
- Bilden von mehreren vorbestimmten eindeutigen Reihenfolgen von Nachrichtentypen und Zuweisen von jeder gebildeten Reihenfolge zu jeweils einer von mehreren Datenquellen, die in dem Satelliten-gestützten Erweiterungssystem für die Erzeugung von Benutzernachrichten genutzt werden (S10),
- Auswählen einer der Datenquellen zum Erzeugen eines Datenstroms mit Benutzernachrichten (S12), und
- Erzeugen des Datenstroms mit Benutzernachrichten durch die ausgewählte Datenquelle unter Verwendung der vorbestimmten eindeutigen Reihenfolge von Nachrichtentypen, die der ausgewählten Datenquelle zugewiesen ist (S14).

2. Verfahren nach Anspruch 1,
**dadurch gekennzeichnet, dass**
solche Nachrichtentypen für das Bilden von eindeutigen Reihenfolgen verwendet werden, die in jedem Datenstrom mit Benutzernachrichten enthalten sein müssen.

3. Verfahren nach Anspruch 2,
**dadurch gekennzeichnet, dass**
als Nachrichtentypen die für das Übermitteln von schnellen Korrekturen von Satelliten eines erweiterten globalen Satellitennavigationssystems vorgesehenen Nachrichtentypen verwendet werden.

4. Verfahren nach Anspruch 1, 2 oder 3,
**dadurch gekennzeichnet, dass**
die Anzahl der verwendeten Nachrichtentypen anhand der Anzahl der Datenquellen, denen eine eindeutige Reihenfolge von Nachrichtentypen zugewiesen ist, gewählt wird.

5. Verfahren nach Anspruch 1, 2, 3 oder 4,
**dadurch gekennzeichnet, dass**
es im Erweiterungssystem EGNOS V3 Phase A eingesetzt wird.

6. Computerprogramm mit Programmcode zur Durchführung aller Verfahrensschritte eines Verfahrens gemäß einem der Ansprüche 1 bis 4, wenn das Computerprogramm in einem Computer ausgeführt wird.

7. Datenträger, auf dem der von einem Computer ausführbare Programmcode des Computerprogramms nach Anspruch 6 gespeichert ist.

8. Vorrichtung zum Erzeugen eines Datenstroms mit Benutzernachrichten in einem Satelliten-gestützten Erweiterungssystem, wobei die Benutzernachrichten unterschiedliche Nachrichtentypen aufweisen können und die Vorrichtung folgendes aufweist:
- erste Mittel (10) zum Bilden von mehreren vorbestimmten eindeutigen Reihenfolgen von Nachrichtentypen und Zuweisen von jeder gebildeten Reihenfolge zu jeweils einer von mehreren Datenquellen (MCC1, MCC2), die in dem Satelliten-gestützten Erweiterungssystem für die Erzeugung von Benutzernachrichten genutzt werden,
- zweite Mittel (NLES) zum Auswählen einer der Datenquellen zum Erzeugen eines Datenstroms mit Benutzernachrichten, und
- dritte Mittel (MGF) zum Erzeugen des Datenstroms mit Benutzernachrichten durch die ausgewählte Datenquelle unter Verwendung der vorbestimmten eindeutigen Reihenfolge von Nachrichtentypen, die der ausgewählten Datenquelle zugewiesen ist.

9. Verwenden einer Vorrichtung nach Anspruch 8 zum Ausführen eines Verfahrens gemäß einem der Ansprüche 1 bis 5.

10. Empfänger für einen Datenstrom mit Benutzernachrichten eines Satelliten-gestützten Erweiterungssystems, der gemäß einem Verfahren nach den Ansprüchen 1 bis 5 und/oder durch eine Vorrichtung nach Anspruch 8 erzeugt wird, wobei der Empfänger ausgebildet ist, im empfangenen Datenstrom eine eindeutige Reihenfolge von Nachrichtentypen von Benutzernachrichten zu erkennen und anhand der erkannten eindeutigen Reihenfolge eine Datenquelle von Benutzernachrichten zu identifizieren.

## Claims

1. Method for generating a data stream comprising user messages in a satellite-based augmentation system, wherein the user messages can include different message types, and the method comprises the following steps:
- forming a plurality of predetermined unique sequences of message types and allocating each formed sequence to in each case one of a plurality of data sources that are used for generating user messages in the satellite-based augmentation system (S10),
- selecting a data source for generating a data stream comprising user messages (S12), and
- generating, by the selected data source, the data stream comprising user messages by using the predetermined unique sequence of message types that is allocated to the selected data source (S14).

2. Method of claim 1,
**characterized in that**
for forming unique sequences, such message types are used that have to be contained in each data stream comprising user messages.

3. Method of claim 2,
**characterized in that**
message types provided for transmitting fast corrections of satellites of an augmented global navigation satellite system are used as message types.

4. Method of claim 1, 2 or 3,
**characterized in that**
the number of the message types used is selected based on the number of data sources that is allocated a unique sequence of message types.

5. Method of claim 1, 2, 3 or 4,
**characterized in that**
it is suitable for the use in the augmentation system EGNOS V3 Phase A.

6. Computer program comprising a program code for carrying out all method steps of a method of any one of claims 1 to 4, if the computer program is executed in a computer.

7. Data carrier on which is stored the program code, that can be carried out by a computer, of the computer program of claim 6.

8. Device for generating a data stream comprising user messages in a satellite-based augmentation system, wherein the user messages can comprise different message types, and the device comprises the following:
- first means (10) for forming a plurality of predetermined unique sequences of message types and for allocating each formed sequence to in each case one of a plurality of data sources (MCC1, MCC2) that are used for generating user messages in the satellite-based augmentation system,
- second means (NLES) for selecting one of the data sources for generating a data stream comprising user messages, and
- third means (MGF) for generating, by the selected data source, the data stream comprising user messages by using the predetermined unique sequence of message types that is allocated to the selected data source.

9. Use of a device of claim 8 for carrying out a method according to any one of claims 1 to 5.

10. Receiver for a data stream comprising user messages of a satellite-based augmentation system, which receiver is produced according to a method of any one of claims 1 to 5 and/or by a device of claim 8, wherein the receiver is configured so as to recognize in the received data stream a unique sequence of message types of user messages and to identify on the basis of the recognized unique sequence a data source of user messages.

## Revendications

1. Procédé permettant de produire dans un système d'augmentation satellitaire un flux de données comprenant des messages utilisateurs, les messages utilisateurs pouvant présenter différents types de message, et ce procédé comportant les étapes suivantes :
- la formation de plusieurs suites distinctes prédéterminées de types de message et l'attribution de chaque suite formée à respectivement une source de données parmi d'autres sources de données qui sont utilisées dans le système d'augmentation satellitaire pour la production de messages utilisateurs (S10),
- la sélection d'une des sources de données pour la production d'un flux de données comprenant des messages utilisateurs (S12), et
- la production du flux de données comprenant des messages utilisateurs par le biais de la source de données sélectionnée en utilisant la suite distincte prédéterminée de types de message qui est attribuée à la source de données sélectionnée (S14).

2. Procédé selon la revendication 1,
**caractérisé en ce que**
les types de message utilisés pour la formation de suites distinctes sont ceux qui doivent être contenus dans chaque flux de données comprenant des messages utilisateurs.

3. Procédé selon la revendication 2,
**caractérisé en ce que**
les types de messages utilisés sont ceux prévus pour la transmission de corrections rapides de satellites d'un système global de navigation par satellite.

4. Procédé selon la revendication 1, 2 ou 3,
**caractérisé en ce que**
le nombre des types de messages utilisés est sélectionné en fonction du nombre des sources de données auxquelles est attribuée une suite distincte de types de message.

5. Procédé selon la revendication 1, 2, 3 ou 4,
**caractérisé en ce que**
EGNOS V3 Phase A est utilisé dans le système d'augmentation.

6. Programme d'ordinateur avec code de programme pour exécuter toutes les étapes d'un procédé selon l'une des revendications 1 à 4 lorsque le programme d'ordinateur est exécuté dans un ordinateur.

7. Support d'enregistrement sur lequel est enregistré le code de programme du programme d'ordinateur exécutable par ordinateur selon la revendication 6.

8. Dispositif destiné à produire dans un système d'augmentation satellitaire un flux de données comprenant des messages utilisateurs, les messages utilisateurs pouvant présenter différents types de message, et ce dispositif présentant ce qui suit :
- des premiers moyens (10) pour former plusieurs suites distinctes prédéterminées de types de message et pour attribuer chaque suite formée à respectivement une source de données parmi d'autres sources de données (MCC1, MCC2) qui sont utilisées dans le système d'augmentation satellitaire pour la production de messages utilisateurs,
- des deuxièmes moyens (NLES) pour sélectionner une des sources de données pour la production d'un flux de données comprenant des messages utilisateurs, et
- des troisièmes moyens (MGF) pour produire le flux de données comprenant des messages utilisateurs par le biais de la source de données sélectionnée en utilisant la suite distincte prédéterminée de types de message qui est attribuée à la source de données sélectionnée.

9. Utilisation d'un dispositif selon la revendication 8 pour mettre en oeuvre un procédé selon l'une des revendication 1 à 5.

10. Récepteur pour un flux de données comprenant des messages utilisateurs et provenant d'un système d'augmentation satellitaire, lequel flux est produit selon un procédé selon les revendications 1 à 5 et/ou par l'intermédiaire d'un dispositif selon la revendication 8, ce récepteur étant réalisé pour reconnaître dans le flux de données réceptionnées une suite distincte de types de message utilisateur et pour identifier à partir de la suite distincte reconnue une source de données des messages utilisateurs.
